# DEMANDE DE BREVET EUROPEEN

(11) **EP 2 546 594 A1**
(43) Date de publication de la demande: **16.01.2013**
(21) Numéro de dépôt: 12175995.5
(22) Date de dépôt: 11.07.2012
(51) Int. Cl.: F28D 1/04, F01N 5/02

(54) **Echangeur de chaleur, notamment pour véhicule automobile, faisant dispositif thermo électrique**

(30) Priorité: 12.07.2011 FR 1156333
(71) Demandeur: Valeo Systèmes Thermiques, 78321 Le Mesnil Saint Denis Cedex (FR)
(72) Inventeur: Boisselle, Patrick, 53000 Laval (FR); Gille, Gérard, 53270 Thorigne-En-Charnie (FR); Monnet, Véronique, 53810 Change (FR)
(74) Mandataire: Gevers France

(57) **Abrégé**

L'invention concerne un échangeur de chaleur, notamment pour véhicule automobile, comprenant des éléments, dits thermo électriques, permettant de générer un courant électrique en présence d'un gradient de température, et un faisceau (1) comprenant une première zone (7) configurée pour permettre un échange de chaleur entre un premier fluide, dit chaud et un second fluide, dit froid, et une seconde zone (8) configurée pour permettre la génération dudit courant électrique par mise en relation thermique des éléments thermo électriques avec des composants du faisceau (1) issus de ladite première partie (7), lesdits composants étant en relation d'échange thermique avec l'un au moins desdits fluides.

## Description

La présente invention concerne un échangeur de chaleur, notamment pour véhicule automobile, faisant dispositif thermo électrique.

Il a déjà été proposé des dispositifs thermo électriques utilisant des éléments, dits thermo électriques, permettant de générer un courant électrique en présence d'un gradient de température entre deux de leurs faces opposées selon le phénomène connu sous le nom d'effet Seebeck. Ces dispositifs comprennent un faisceau formé d'un empilement de premiers tubes, destinés à la circulation des gaz d'échappement d'un moteur, et de seconds tubes, destinés à la circulation d'un fluide caloporteur d'un circuit de refroidissement. Les éléments thermo électriques sont pris en sandwich entre les tubes de façon à être soumis à un gradient de température provenant de la différence de température entre les gaz d'échappement, chauds, et le fluide de refroidissement, froid.

Des tels dispositifs sont particulièrement intéressants car ils permettent de produire de l'électricité à partir d'une conversion de la chaleur provenant des gaz d'échappement du moteur. Ils offrent ainsi la possibilité de réduire la consommation en carburant du véhicule en venant se substituer, au moins partiellement, à l'alternateur habituellement prévu dans celui-ci pour générer de l'électricité à partir d'une courroie entrainée par le vilebrequin du moteur.

Cela étant, les dispositifs thermo électriques connus utilisent un faisceau intégralement dédié à la création du gradient thermique nécessaire au fonctionnement des éléments thermo électriques.

La présente invention part de la constatation que de nombreux échangeurs sont déjà à disposition dans les véhicules automobiles et que la structure de leur faisceau est proche de celle d'un faisceau d'un dispositif thermo électrique. En outre, leur fonctionnement repose sur un autre point commun à savoir la présence de deux fluides à des températures différentes au contact du faisceau. Dans le cas d'un échangeur, il s'agit de refroidir/réchauffer l'un à l'aide de l'autre. Dans le cas d'un dispositif thermo électrique, comme dit plus haut, il s'agit de créer le gradient de température nécessaire au fonctionnement des éléments thermo électrique.

Il est ainsi apparu au déposant que des mutualisations seraient possibles et avantageuses.

L'invention propose à cet effet un échangeur de chaleur, notamment pour véhicule automobile, comprenant des éléments, dits thermo électriques, permettant de générer un courant électrique en présence d'un gradient de température, et un faisceau comprenant une première zone configurée pour permettre un échange de chaleur entre un premier fluide, dit chaud et un second fluide, dit froid, et une seconde zone configurée pour permettre la génération dudit courant électrique par mise en relation thermique des éléments thermo électriques avec des composants du faisceau issus de ladite première partie, lesdits composants étant en relation d'échange thermique avec l'un au moins desdits fluides.

On assure ainsi à la fois, à l'aide d'un seul et même faisceau, une fonction d'échange de chaleur permettant de refroidir le fluide chaud et de réchauffer le fluide froid, d'une part, et, d'autre part, une fonction d'apport de l'une au moins des sources chaudes ou froides nécessaire au fonctionnement des éléments thermo électriques.

A titre d'exemple, le fluide chaud pourra être le fluide d'une boucle de refroidissement du moteur du véhicule, en particulier pris en sortie du moteur, et le fluide froid l'air ambiant. L'échangeur sera alors, notamment, configuré pour être situé au niveau d'une face avant de véhicule de façon à pouvoir être traversé par le flux d'air circulant à travers une calandre du véhicule.

On peut noter qu'un tel exemple d'application de l'invention permet de générer un courant électrique à l'aide d'éléments thermo électriques sans avoir à disposer le dispositif les intégrant dans la voie d'échappement du moteur du véhicule. On évite de la sorte de créer une résistance à l'écoulement des gaz d'échappement et l'on conserve ainsi l'intégralité de la puissance du moteur.

Selon différents modes de réalisation de l'invention, qui pourront être pris ensemble ou séparément :
- lesdits composants du faisceau issus de la première partie sont configurés pour être en relation thermique avec le fluide chaud,
- l'échangeur comprend des composants propres à chacune desdites première et seconde zones pour l'échange thermique entre le fluide froid et le fluide chaud, d'une part, et, d'autre part, pour la mise en relation thermique entre le fluide froid et les éléments thermo électriques,
- la première zone est prévue en aval de la seconde zone selon le sens de circulation du fluide chaud,
- la première zone et la seconde zone sont prévues en parallèle selon le sens de circulation du fluide chaud,
- ledit faisceau est du type tubes intercalaires,
- ledit faisceau comprend des tubes ronds et/ou ovales et des premiers intercalaires en relation d'échange thermique avec lesdits tubes ronds et/ou ovales, lesdits tubes ronds et/ou ovales formant les composants du faisceau issus de ladite première partie, ladite deuxième partie du faisceau comprenant en outre des seconds intercalaires en relation d'échange thermique avec le second fluide, lesdits éléments thermo électriques étant positionnés entre lesdits premiers et seconds intercalaires,
- les seconds intercalaires sont configurés pour faire un écran thermique protégeant les premiers intercalaires d'un flux du second fluide,
- au moins l'un desdits seconds intercalaires a une forme d'épingle, des flancs de l'épingle venant de part et d'autre d'un des premiers intercalaires, prévu plan,
- au moins l'un des seconds intercalaires a une forme en L, un flanc du L venant coiffer l'un au moins desdits premiers intercalaires, prévu plan,
- ledit faisceau comprend des tubes plats formant les composants du faisceau issus de ladite première partie, ladite deuxième partie du faisceau

comprenant en outre des intercalaires en relation d'échange thermique avec le second fluide, lesdits éléments thermo électriques étant positionnés entre lesdits tubes plats et lesdits intercalaires,
- les intercalaires sont configurés pour faire un écran thermique protégeant les tubes d'un flux du second fluide,
- les intercalaires présentent une forme d'épingle, des flancs parallèles de l'épingle étant glissés entre deux tubes voisins,
- l'un au moins desdits flancs parallèles est prolongé par une jupe venant faire écran devant le tube contiguë.

On peut noter qu'en associant les éléments thermo électriques à des ailettes, on facilite l'intimité du contact entre ceux-ci et les composants du dispositif au contact desquels ils doivent se trouver pour être soumis à un gradient de température. En effet, l'obligation d'établir une liaison étroite entre les éléments thermo électriques et le ou les composants créant le gradient de température nécessaire à leur fonctionnement n'est plus portée, ou en tous cas plus uniquement, par des tubes de circulation de fluide mais par un composant spécifique, les ailettes, qui peut donc être choisie pour cela.

Selon un aspect de l'invention, lesdits éléments thermo électriques sont pré assemblés en module. Cela facilitera leur assemblage dans l'échangeur.

Le dispositif conforme à l'invention pourra en outre comprendre des boîtes collectrices pour le fluide chaud dans lequel les tubes du faisceau débouchent par leurs extrémités.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique, en perspective, un premier exemple de réalisation de l'échangeur selon l'invention,
- la figure 2 illustre de façon schématique, en perspective, un second exemple de réalisation de l'échangeur selon l'invention,
- la figure 3 illustre de façon schématique, selon une perspective partielle, un premier exemple de réalisation d'une seconde partie d'un faisceau d'un dispositif conforme à l'invention,
- la figure 4 illustre de façon schématique, selon un plan de coupe suivant l'axe longitudinal d'un tube du faisceau de la figure 3, un détail de ladite figure 3,
- la figure 5 illustre de façon schématique, selon une perspective partielle, une variante de réalisation du dispositif de la figure 3,
- la figure 6 illustre, de façon schématique, selon une perspective partielle, une autre variante de réalisation du dispositif de la figure 3,
- la figure 7 illustre, selon la même vue que celle utilisée à la figure 4, un détail de la variante de réalisation du dispositif de la figure 6,
- la figure 8 illustre en perspective partielle un intercalaire du dispositif de la figure 6.

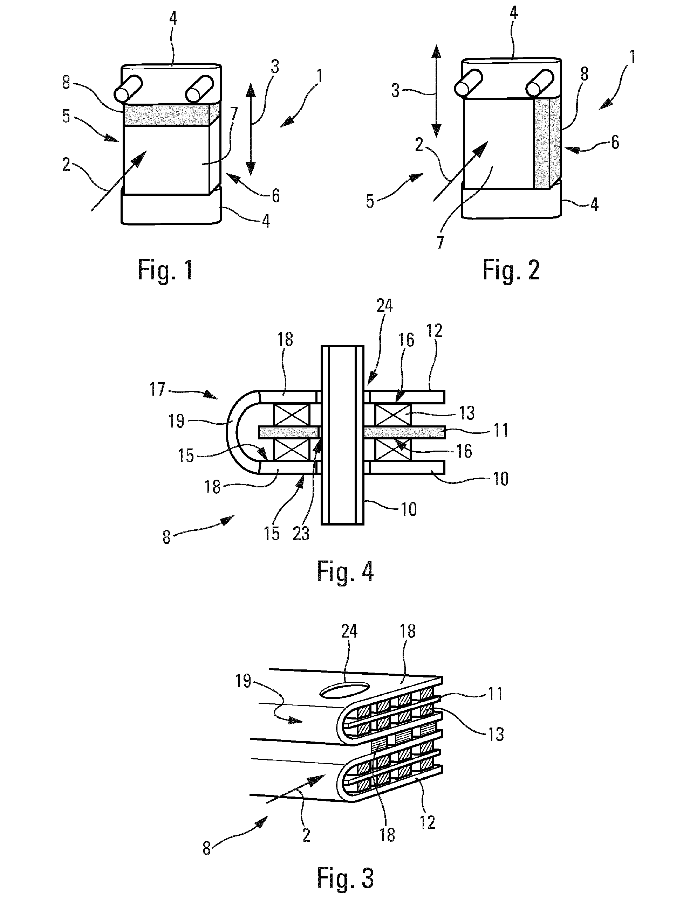

Comme illustré aux figures 1 et 2, l'invention concerne un échangeur de chaleur, notamment pour véhicule automobile, comprenant un faisceau 1 permettant, selon une première fonction, un échange de chaleur entre un premier fluide, dit chaud et un second fluide, dit froid. L'échangeur conforme à l'invention est ainsi destiné à accueillir en entrée deux fluides, le premier, à savoir le fluide chaud, présentant une température plus élevée que le second, à savoir le fluide froid.

Le fluide chaud pourra être le fluide de refroidissement d'une boucle de refroidissement du moteur du véhicule et le fluide froid un flux d'air ambiant provenant de la face avant du véhicule, à travers sa calandre. D'autres types de fluides sont cependant envisageables, notamment d'autre types de fluide chauds. Il pourra s'agir, en particulier, de fluides chauds dont le circuit passe par la face avant du véhicule pour permettre leur refroidissement et/ou un changement de phase.

L'échangeur est configuré, notamment, pour que le fluide chaud traverse l'échangeur dans une première direction, illustré par la flèche repérée 3, et que le fluide froid traverse l'échangeur dans une seconde direction, illustrée par la flèche repérée 2, notamment sensiblement perpendiculaire à la première direction 3. Il est muni de boîtes collectrices 4 pour distribuer le liquide chaud dans le faisceau 1 et pour collecter ledit fluide chaud sortant dudit faisceau 1.

Les boîtes collectrices permettent ici une circulation du fluide chaud en U. La boîte collectrice supérieure 4 présente une cloison interne, non visible, divisant la boîte en deux parties, chacune munie d'une tubulure d'entrée/sortie du fluide chaud. Le fluide chaud pénètre ainsi dans une première partie de la boîte collectrice supérieure par la tubulure d'entrée, il parcoure le faisceau selon la direction 3, vers le bas, sur une première partie du faisceau, il est collecté par la boîte collectrice inférieure 4 et distribué dans l'autre partie du faisceau qu'il parcourt vers le haut, selon la direction 3, il est enfin collecté par la seconde partie de la boîte collectrices supérieure 4 et sort de l'échangeur par sa tubulure de sortie.

Le faisceau présente, par exemple, une forme globalement parallélépipédique. Les boîtes collectrices 4 sont situées sur deux côtés opposés du parallélogramme. Le faisceau présente deux premières faces 5, opposées, et deux secondes faces 6, opposées, reliant les boîtes 4. L'échangeur est configuré pour que le flux de fluide froid soit perpendiculaire aux premières faces 5. La dimension du faisceau selon la direction 2 du flux de fluide froid, à savoir sa profondeur est, par exemple, inférieure aux autres dimensions du faisceau, à savoir sa largeur et sa hauteur, c'est-à-dire aux dimensions des premières faces 5.

Un échangeur ainsi configuré est destiné, par exemple, à être situé en face avant du véhicule. Il pourra cependant être placé en d'autres localisations du véhicule. De même les échangeurs conformes à l'invention pourront présenter d'autres configurations tout en restant destinés à être situés en face avant de véhicule.

Comme développé plus loin, il pourront comprendre un faisceau 1 de tubes et d'ailettes, du type mécanique. Les tubes, prévus rond et/ou oblongs, sont parallèles entre eux et permettent le passage du fluide chaud. Ils débouchent par chacune de leur extrémité dans les boîtes collectrices 4, par l'intermédiaire d'orifices de passage prévus sur celles-ci, par exemple au niveau de plaques collectrices desdites boîtes. Les ailettes, prévues planes, sont perpendiculaires aux tubes et traversées par ces derniers. Le faisceau est configuré pour que le flux de fluide froid passe entre les ailettes. Les ailettes sont maintenues sur les tubes et/ou les tubes sont maintenus dans les boîtes, par exemple, par sertissage. Un joint est utilisé pour faire une étanchéité entre les plaques collectrices et les tubes au niveau de chacun de leurs orifices de passage.

Il pourra aussi s'agir de faisceaux de tubes et d'intercalaires brasés. Les tubes, prévus plats, sont parallèles entre eux et permettent le passage du fluide chaud. Ils débouchent par chacune de leur extrémité dans les boîtes collectrices 4, par l'intermédiaire d'orifice de passage prévus sur celles-ci, par exemple au niveau de plaques collectrices desdites boîtes. Les intercalaires, prévues ondulés, sont disposés entre les tubes et au contact de ceux-ci par les sommets de leurs ondulations. Le faisceau est configuré pour que le flux de fluide froid passe entre les plis des ondulations desdits intercalaires. Les intercalaires, les tubes et les boîtes collectrices, ou au moins leur plaque collectrice, sont assemblés par brasage.

Selon l'invention, l'échangeur comprend également des éléments, dits thermo électriques permettant de générer un courant électrique en présence d'un gradient de température, non représentés à ces figures.

Il s'agit, par exemple, d'éléments de forme sensiblement parallélépipédiques générant un courant électrique, selon l'effet Seebeck, lorsqu'ils sont soumis audit gradient entre deux de leurs faces opposées, dites faces actives. De tels éléments permettent la création d'un courant électrique dans une charge connectée entre lesdites faces actives. De façon connue de l'homme du métier, de tels éléments sont constitués, par exemple, de Bismuth et de Tellurium (Bi₂Te₃).

Toujours selon l'invention, le faisceau comprend une première zone 7 configurée pour permettre ledit échange de chaleur entre le fluide chaud et le fluide froid et une seconde zone 8 configurée pour permettre la génération dudit courant électrique par mise en relation thermique des éléments thermo électriques avec des composants du faisceau issus de ladite première partie 7, lesdits composants étant prévus en relation d'échange thermique avec l'un au moins desdits fluides.

On dispose ainsi d'un échangeur réalisant à la fois une fonction classique d'échange de chaleur, le fluide froid refroidissant le fluide chaud et le fluide chaud réchauffant le fluide froid, dans la première zone 7, et une conversion de chaleur en courant électrique, dans la seconde zone 8. De plus l'invention permet une mutualisation des moyens employés en proposant un pont thermique entre la première partie 7 et la deuxième partie 8 du faisceau afin que le gradient thermique nécessaire à la génération d'électricité proviennent de l'un au moins des fluides.

A ce sujet, lesdits composants du faisceau issus de la première partie 7 sont configurés pour être en relation thermique, par exemple, avec le fluide chaud.

Par contre, l'échangeur pourra comprendre des composants propres à chacune desdites première 7 et seconde 8 zones pour la mise en relation thermique entre le fluide froid et les éléments thermo électriques, d'une part, et pour l'échange thermique entre le fluide froid et le fluide chaud, d'autre part.

La première zone 7 et la seconde 8 pourront être traversées par le même fluide froid, indépendamment l'une de l'autre. C'est par exemple le cas avec des échangeurs de face avant dans lequel une partie du flux d'air ambiant traversera la première zone 8 du faisceau et une autre partie du flux d'air ambiant traversera le seconde zone 7 tandis que le fluide chaud traversant les deux zones 7, 8, à savoir le fluide caloporteur de refroidissement du moteur, proviendra de la même boîte distributrice et débouchera dans la même boîte collectrice.

Selon un premier mode de réalisation, illustré à la figure 1, la première zone 7 est prévue en aval de la seconde zone 8 selon le sens de circulation du fluide chaud, au moins pour une partie de ladite seconde zone 8.

Selon un second mode de réalisation, illustré à la figure 2, la première zone 7 et la seconde zone 8 sont prévues en parallèle selon le sens de circulation du fluide chaud. Dans le cas d'une circulation du fluide chaud en U, la seconde zone 8 sera de préférence dans la partie du faisceau 1 reliée à la tubulure d'entrée.

Différents exemples de structure de faisceaux, en particulier de secondes zones 8 desdits faisceaux vont maintenant être décrits en relation avec les figures suivantes. Il s'agit de faisceaux du type tubes intercalaires, comme déjà évoqué plus haut.

Aux figures 3 à 5, il s'agit d'un échangeur avec faisceau de type mécanique. Ledit faisceau comprend des tubes ronds et/ou ovales 10 et des premiers intercalaires 11 en relation d'échange thermique avec lesdits tubes ronds et/ou ovales 10, lesdits tubes ronds et/ou ovales 10 formant les composants du faisceau issus de ladite première partie 7, non représentée. Ladite deuxième partie 8 du faisceau comprend en outre des seconds intercalaires 12 en relation d'échange thermique avec le second fluide, lesdits éléments thermo électriques 13 étant positionnés entre lesdits premiers 11 et seconds 12 intercalaires.

Selon ce mode de réalisation, ce sont donc les premiers 11 et seconds 12 intercalaires qui remplissent la fonction d'établissement du contact thermique avec les éléments thermo électriques 13.

Les premiers 11 et seconds 12 intercalaires sont, par exemple, en forme d'ailettes planes. Par ailette, on entend un élément présentant deux grandes surfaces opposées 15 planes et d'épaisseur très inférieure à sa largeur et à sa longueur, permettant d'établir un contact surfacique entre lesdites grandes surfaces et les éléments thermo électrique 13 au niveau de la ou de leurs faces actives 16. Les ailettes sont formées, par exemple, en aluminium et/ou alliage d'aluminium.

La première partie du faisceau pourra elle aussi comprendre des intercalaires en forme d'ailette plane en relation d'échange thermique avec les tubes, par exemple des intercalaires identiques aux premiers intercalaires 11 de la deuxième partie 8 du faisceau.

Les seconds intercalaires 12 sont configurés, par exemple, pour faire un écran thermique protégeant les premiers intercalaires 11 d'un flux du second fluide.

Selon le mode de réalisation des figures 3 et 4, les seconds intercalaires 12 sont en forme d'épingle 17, des flancs 18 de chaque épingle venant de part et d'autre d'un des premiers intercalaires 11. Les flancs 18 de l'épingle 17 sont reliés, par exemple, par un coude 19 définissant ledit écran thermique. De cette manière, on concentre le plus de chaleur possible vers les éléments thermo électriques 13 et on assure le plus grand gradient de température possible.

Les éléments thermo électriques 13 sont situés entre les premiers intercalaires 11 et les flancs 18 des épingles 17, notamment en plusieurs rangs, ici en rang de quatre éléments. Ils sont, par exemple, de dimension millimétrique, voire micrométrique.

Des plots élastiques 38 pourront être prévus entres les épingles 17 pour que les flancs 18 de ces dernières assurent une pression sur les éléments thermo électriques 13. On permet ainsi une absorption du stress mécanique généré par la dilatation des tubes 10 et des intercalaires 11, 12.

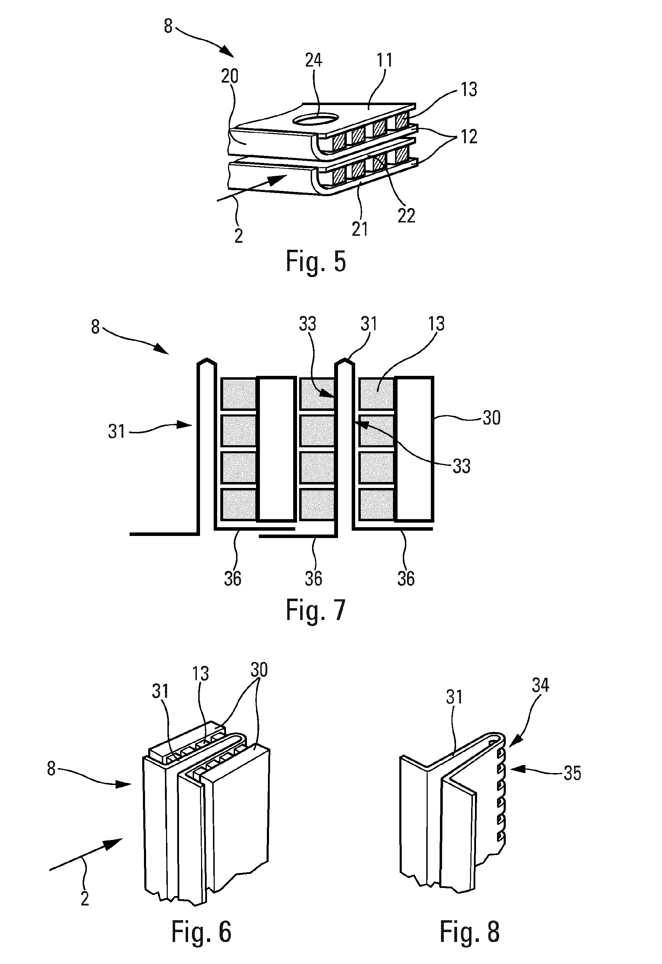

Selon le mode de réalisation de la figure 5, les seconds intercalaires 12 ont une forme en L, un flanc 20 du L venant coiffer l'un au moins desdits premier intercalaires 11. On obtient de la sorte un résultat similaire à celui obtenu avec le coude 19 du mode de réalisation précédent.

Les éléments thermo électriques 13 sont situés entre l'autre flanc 21 du L et la face 22 du premier intercalaire 11, prévue en vis-à-vis. Ils sont disposés, notamment, en plusieurs rangs, ici de quatre éléments. Lesdits éléments thermo électriques 13 sont là encore, par exemple, de dimensions millimétrique, voire micrométrique.

Dans les deux modes de réalisation précédents, les premiers intercalaires 11 sont munis d'orifice 23 pour le passage des tubes 10 avec lesquelles ils sont en contact. Les seconds intercalaires 12 sont munis d'orifices 24 permettant également le passage des tubes 10 mais, cette fois, sans contact pour éviter tout pont thermique entre le fluide chaud et le fluide froid.

Selon le mode de réalisation des figures 6 à 8, le faisceau est, par exemple, de type brasé. Il comprend des tubes plats 30 formant les composants du faisceau issus de ladite première partie 7, non-illustrée, ladite deuxième partie 8 du faisceau comprenant en outre des intercalaires 31 en relation thermique avec le second fluide, lesdits éléments thermo électriques 13 étant positionnés entre lesdits tubes plats 30 et lesdits intercalaires 31.

Dans sa première partie, le faisceau comprend, par exemple, des intercalaires en forme d'ailettes ondulées, telles qu'évoquées plus haut, en relation d'échange thermique, d'une part, avec le second fluide et, d'autre part, avec les tubes 30.

Les intercalaires 31 de la seconde partie 8 sont configurés, notamment, pour faire un écran thermique protégeant les tubes plats 30 d'un flux du second fluide, pour les mêmes raisons que dans les modes de réalisation précédent.

Lesdits intercalaires 31 de la seconde partie 8 présentent, par exemple, une forme d'épingle, des flancs 33 parallèles de l'épingle étant glissés entre deux tubes 30 voisins.

Les éléments thermo électriques 13 sont, par exemple, entre les tubes 30 et les flancs parallèles 33 des épingles 32, notamment en plusieurs rangs, ici en rang de quatre éléments. Lesdites épingles 32 pourront être prévues précontraintes pour assurer un effort permettant de plaquer les éléments thermo électriques 13 contre les tubes plats 30.

Le fond 34 desdites épingles 32 pourra présenter des découpes 35 facilitant le passage 34 du fluide froid à travers la seconde partie 8 du faisceau.

Lesdits flancs parallèles 33 sont ici prolongés par une jupe 36 de manière à définir l'écran thermique évoqué plus haut. Autrement dit, la jupe 36 vient faire écran devant le tube 30 contigüe. Chaque épingle 32 est ici munie de ladite jupe 36 au niveau de chacun des flancs parallèles 33, l'une des jupes 36 d'une des épingles 32 recouvrant l'une des jupes 36 de l'épingle 32 voisine.

Les intercalaires ondulés de la première partie ont une hauteur correspondant, par exemple, à la hauteur entre deux tubes 30 voisins, c'est-à-dire, une hauteur correspondant à celle de deux rangs d'éléments thermo électriques 13 complétée de la hauteur de l'épingle située entre les deux rangs.

Lesdits tubes chauds 30 sont, par exemple, des tubes sensiblement plats comprenant deux grandes faces opposées parallèles sur laquelle sont disposés les éléments thermo électrique 13 par l'une de leur face active, l'autre face active étant en contact avec l'une des épingles au niveau de leur flanc 33. Ils sont, par exemple, en aluminium et/ou alliages d'aluminium. Les intercalaires 31 de la seconde partie 8, comme ceux de la première partie 7, pourront eux aussi être en aluminium et/ou alliages d'aluminium.

D'un point de vue électrique, les ailettes ou intercalaires 11, 12, 31 sont revêtues, par exemple, d'un matériau électriquement isolant et sont munis, au niveau de leur face située en vis-en-vis des éléments thermo électriques 13 d'une ou plusieurs pistes électriquement conductrices, non-représentées, reliant, en série et/ou en parallèle, les éléments thermo électriques disposés sur l'intercalaire.

De même, les tubes plats 30 pourront être revêtus au niveau de leur grandes faces d'une couche de matériau électriquement isolant et sont munies de pistes électriquement conductrices reliant, en série et/ou en parallèle, tout ou partie des éléments thermo électriques disposés sur les tubes plats 30.

Les éléments thermo électriques sont, par exemple, pour une première partie, des éléments d'un premier type, dit P, permettant d'établir une différence de potentiel électrique dans un sens, dit positif, lorsqu'ils sont soumis à un gradient de température donné, et, pour l'autre partie, des éléments d'un second type, dit N, permettant la création d'une différence de potentiel électrique dans un sens opposé, dit négatif, lorsqu'ils sont soumis au même gradient de température.

Les éléments thermo électrique de type P seront avantageusement associés en série, par l'intermédiaire desdites intercalaires 11, 12, 31 ou des tubes plats 30 avec des éléments thermo électriques de type N. Tout ou partie des éléments thermo électriques d'un même type pourront être associés en parallèle.

Pour faciliter le montage, les éléments thermo électriques 13 pourront être pré assemblés en modules, prêts à être insérés entre les premiers et seconds intercalaires 11, 12 ou les tubes 30 et les intercalaires correspondants 31. Lesdits modules se présentent, par exemple, sous la forme de blocs rigides et comprennent deux plaques thermiquement conductrices et présentant leur propre circuit électrique reliant les éléments thermo électriques, ces derniers étant prévus entre lesdites deux plaques. Lesdits éléments thermo électriques sont, notamment, noyés dans une résine protectrice.

Comme déjà évoqué, l'échangeur conforme à l'invention pourra être utilisé en lieu et place d'un échangeur classique, notamment échangeur de face avant de véhicule, tel que des radiateurs de refroidissement du moteur du véhicule, refroidisseur d'air de suralimentation ou autres. Il pourra aussi cependant être utilisé dans la ligne d'échappement du moteur pour, à la fois, réchauffer le fluide froid et générer du courant électrique à l'aide de la chaleur des gaz d'échappement.

## Revendications

1. Echangeur de chaleur, notamment pour véhicule automobile, comprenant des éléments (13), dits thermo électriques, permettant de générer un courant électrique en présence d'un gradient de température, et un faisceau (1) comprenant une première zone (7) configurée pour permettre un échange de chaleur entre un premier fluide, dit chaud et un second fluide, dit froid, et une seconde zone (8) configurée pour permettre la génération dudit courant électrique par mise en relation thermique des éléments thermo électriques avec des composants (10, 30) du faisceau (1) issus de ladite première partie (7), lesdits composants (10, 30) étant en relation d'échange thermique avec l'un au moins desdits fluides.

2. Echangeur selon la revendication 1 dans lequel lesdits composants (10, 30) du faisceau issus de la première partie (7) sont configurés pour être en relation thermique avec le fluide chaud.

3. Echangeur selon la revendication 2 comprenant des composants propres à chacune desdites première (7) et seconde (8) zones pour l'échange thermique entre le fluide froid et le fluide chaud, d'une part, et pour la mise en relation thermique entre le fluide froid et les éléments thermo électriques (13), d'autre part.

4. Echangeur selon l'une quelconque des revendications 2 ou 3 dans lequel la première zone (7) est prévue en aval de la seconde zone (8) selon le sens de circulation du fluide chaud.

5. Echangeur selon l'une quelconque des revendications 2 ou 3 dans lequel la première zone (7) et la seconde zone (8) sont prévues en parallèle selon le sens de circulation du fluide chaud.

6. Echangeur selon l'une quelconque des revendications précédentes dans lequel ledit faisceau (1) est du type tubes intercalaires.

7. Echangeur selon l'une quelconque des revendications précédentes dans lequel ledit faisceau (1) comprend des tubes (10) ronds et/ou ovales et des premiers intercalaires (11) en relation d'échange thermique avec lesdits tubes ronds et/ou ovales (10), lesdits tubes ronds et/ou ovales (10) formant les composants du faisceau issus de ladite première partie, ladite deuxième partie (8) du faisceau comprenant en outre des seconds intercalaires (12) en relation d'échange thermique avec le second fluide, lesdits éléments thermo électriques (13) étant positionnés entre lesdits premiers (11) et seconds (12) intercalaires.

8. Echangeur selon la revendication 7 dans lequel les seconds intercalaires (12) sont configurés pour faire un écran thermique protégeant les premiers intercalaires (11) d'un flux du second fluide.

9. Echangeur selon l'une quelconque des revendications 7 ou 8 dans lequel au moins l'un desdits seconds intercalaires (12) a une forme d'épingle (17), des flancs (18) de l'épingle venant de part et d'autre d'un des premiers intercalaires (11), prévu plan.

10. Echangeur selon l'une quelconque des revendications 7 ou 8 dans lequel au moins l'un des seconds intercalaires (12) a une forme en L, un flanc (20) du L venant coiffer l'un au moins desdits premiers intercalaires (11), prévu plan.

11. Echangeur selon l'une quelconque des revendications précédentes dans lequel ledit faisceau (1) comprend des tubes plats (30) formant les composants du faisceau issus de ladite première partie (7), ladite deuxième partie (8) du faisceau comprenant en outre des intercalaires (31) en relation d'échange thermique avec le second fluide, lesdits éléments thermo électriques (13) étant positionnés entre lesdits tubes plats et lesdits intercalaires (31).

12. Echangeur selon la revendication 11 dans lequel les intercalaires (31) sont configurés pour faire un écran thermique protégeant les tubes (30) d'un flux du second fluide.

13. Echangeur selon l'une quelconque des revendications 11 ou 12 dans lequel les intercalaires (31) présentent une forme d'épingle, des flancs (33) parallèles de l'épingle étant glissés entre deux tubes (30) voisins.

14. Echangeurs selon l'une quelconque des revendications précédentes dans lequel lesdits éléments thermo électriques (13) sont pré assemblés en module.

15. Echangeur selon l'une quelconque des revendications précédentes, configuré pour être situé en face avant d'un véhicule automobile.
